# EUROPEAN PATENT APPLICATION

(11) **EP 1 961 602 A1**
(43) Date of publication of application: **27.08.2008**
(21) Application number: 06834430.8
(22) Date of filing: 11.12.2006
(51) Int. Cl.: B60K 7/00, B60G 3/18, B60G 13/16, B60K 17/14, B60L 15/00, H02K 7/116

(54) **IN-WHEEL MOTOR SYSTEM**

(30) Priority: 12.12.2005 JP 2005357927; 15.12.2005 JP 2005362310; 16.12.2005 JP 2005362702; 19.12.2005 JP 2005364454; 20.12.2005 JP 2005365882
(71) Applicant: Kabushiki Kaisha Bridgestone, Chuo-ku, Tokyo 104-8340 (JP)
(72) Inventor: NISHIOKA, Satoshi, Kodaira-shi, Tokyo 187-8531 (JP); IWANO, Haruo, Kodaira-shi, Tokyo 187-8531 (JP); TASHIRO, Katsumi, Kodaira-shi, Tokyo 187-8531 (JP)
(74) Representative: Whalley, Kevin
(86) International application number: PCT/JP2006/324675
(87) International publication number: WO 2007/069567

(57) **Abstract**

An electric motor 10 and a reduction gear mechanism 11 are connected to each other by a flexible coupling 12, such as an Oldham' s coupling, which is a power transmission mechanism. Also, a casing 11c of the reduction gear mechanism 11 is integrally structured together with a knuckle 5, which is an unsprung part of a vehicle, or mounted to the knuckle 5. Further, a motor case 10a of the electric motor 10 is mounted to a motor mounting member 4m provided on the lower part of a strut 4 for suspending the knuckle 5 through the medium of a shock absorbing mechanism 20 equipped with a spring member 21, a damper, and two guide members 23 for guiding the operating direction of the spring member 21 and the damper. An in-wheel motor system thus structured allows the mass of the motor 10 to act as the mass of a dynamic damper and thus features not only improved ground contact performance and riding comfort of a vehicle running on a rough road but also superior space efficiency.

## Description

### TECHNICAL FIELD

The present invention relates to an in-wheel motor system equipped with a wheel driving motor adjoining a wheel and, more particularly, to an in-wheel motor system so structured as to support the motor through the medium of a shock absorbing mechanism or a shock absorbing member with respect to the around-the-wheel parts of a vehicle.

### BACKGROUND ART

In recent years, in-wheel motor systems are increasingly introduced into motor-driven vehicles such as electric vehicles. Those in-wheel motor systems typically have an electric motor or a geared driving motor or the like, which integrally incorporates an electric motor and a planetary reducer within a motor case, adjoining a wheel.
Generally, however, with vehicles having suspension mechanisms such as springs around the wheels, the greater the so-called unsprung mass, which is the mass of unsprung parts such as wheels, knuckles and suspension arms, is, the worse the road holding performance of the vehicle will be due to variation in the road engaging force of the tire when the vehicle is running on an uneven road. And, conventionally, there has been a problem that equipping a vehicle with in-wheel motors increases the unsprung mass, thus causing a drop in the road holding performance because the above-mentioned driving motor is coupled to the part called an upright or knuckle, which is one of the parts around the wheel of a vehicle.
In contrast with that, much attention is drawn to in-wheel motor systems which have the in-wheel motor elastically supported by a shock absorbing mechanism or a shock absorbing member with respect to the around-the-wheel parts of a vehicle, such as a knuckle, thus having the motor "floating-mounted" with respect to the around-the-wheel parts. Such in-wheel motor systems, by having the motor itself act as the weight of a dynamic damper, feature markedly improved ground contact performance and riding comfort of a vehicle running on a rough road (For example, see References 1 to 3).
Reference 1: WO 02/083446 Al
Reference2: Japanese Unexamined Patent Application Publication No. 2005-126037
Reference 3: Japanese Unexamined Patent Application Publication No. 2005-225486

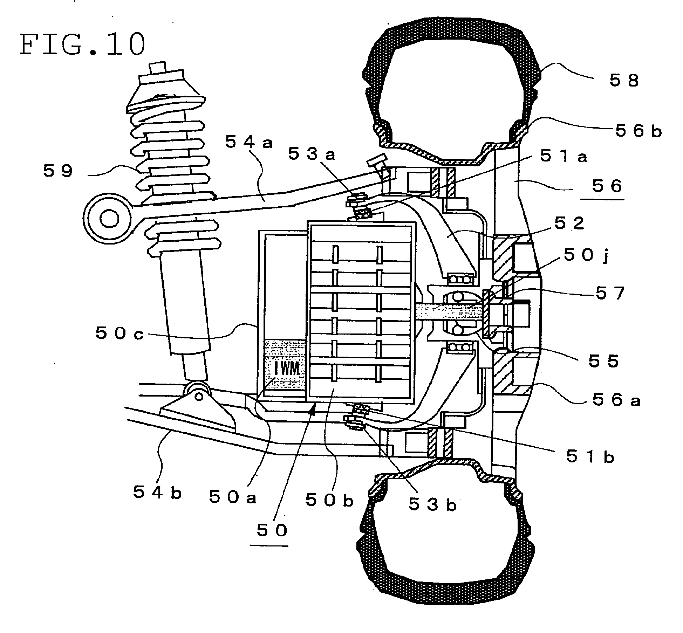

FIG. 10 illustrates a structural example of an in-wheel motor system which is provided with a wheel support system having a conventional double wishbone suspension. In this in-wheel motor system, a motor case 50c for a geared motor (in-wheel motor) 50, which integrally incorporates an electric motor 50a and a planetary reducer 50b within the motor case 50c, is mounted at the top and the bottom to motor mounts 51a and 51b, which are each a rubber or spring member expandible and contractible in the vertical direction of the vehicle. Also, the motor mounts 51a and 51b and knuckles 52 are connected to upper and lower suspension arms 54a and 54b via ball joints 53a and 53b, so that the motor 50 is floating-mounted between the knuckles 52, which are an unsprung part as mentioned above, thus having the motor 50 act as a weight of a dynamic damper. Also, an output shaft 50j of the planetary reducer 50b is connected to a wheel hub 57 mounted on a wheel disk 56a of a wheel 56 via a constant-velocity joint 55, so that the drive force of the motor 50 can be steadily transmitted to the wheel 56. Note that in the figure the numeral 58 denotes a tire fitted to a rim 56b of the wheel 56 and numeral 59 a suspension member consisting of a shock absorber or the like mounted on the upper and lower suspension arms 54a and 54b.

### DISCLOSURE OF THE INVENTION

### PROBLEMS TO BE SOLVED BY THE INVENTION

In the aforementioned conventional in-wheel motor system, however, a planetary reducer 50b with large output torque and a wheel 56 are coupled to each other by a constant-velocity joint 55, which is a power transmission mechanism. Hence, the large load torque of the power transmission mechanism presents a problem of durability.
Also, the characteristics of a motor, the reduction ratio of a reduction gear mechanism, and the like must be selected to meet the tire size, necessary torque and so on. However, in a conventional case as described above, an electric motor 51a and a planetary reducer 50b are integrally structured together, so that there is a problem of inability to replace the electric motor 51a and the planetary reducer 50b separately.

The present invention has been made in view of these conventional problems, and an object thereof is to provide an in-wheel motor system that not only excels in space efficiency but also provides a reliable "floating-mounting" of a motor with respect to the unsprung parts of a vehicle.

### MEANS FOR SOLVING THE PROBLEM

According to a first aspect of the present invention, there is provided an in-wheel motor system comprising an electric motor and a reduction gear mechanism for reducing the rotation speed of an output shaft of the motor and transmitting the motive power of the motor to the wheel, wherein the motive power of the motor is transmitted to the wheel through the reduction gear mechanism, and wherein a motor case supporting the stator side of the motor is mounted on an unsprung part of a vehicle through the medium of a shock absorbing member or a shock absorbing mechanism and a casing of the reduction gear mechanism is integrally structured together with a knuckle which is coupled to a suspension mechanism of the vehicle.
According to a second aspect of the present invention, there is provided an in-wheel motor system, wherein the casing of the reduction gear mechanism and the motor case are structured as separate units.
According to a third aspect of the present invention, there is provided an in-wheel motor system, wherein the motor and the reduction gear mechanism are connected to each other by a flexible coupling.
According to a fourth aspect of the present invention, there is provided an in-wheel motor system, wherein a motor mounting member is disposed on a strut suspending the knuckle from a vehicle body and the shock absorbing member or shock absorbing mechanism is disposed between the motor mounting member and the upper face side of the motor case.

According to a fifth aspect of the present invention, there is provided an in-wheel motor system, wherein the reduction gear mechanism is constituted by a first reduction gear mechanism directly connected to an output shaft of the motor and a second reduction gear mechanism connecting the first reduction gear mechanism to the wheel.
According to a sixth aspect of the present invention, there is provided an in-wheel motor system, wherein a planetary gear mechanism is used as the reduction gear mechanism.

According to a seventh aspect of the present invention, there is provided an in-wheel motor system, wherein the upper face side of the motor case supporting the stator side of the motor is connected to a knuckle coupled to a wheel section by a shock absorbing mechanism equipped with a spring member and a damper and the spring member is disposed at the center of the motor case in the tire fore-aft direction on the upper face side thereof.
According to an eighth aspect of the present invention, there is provided an in-wheel motor system, wherein the shock absorbing mechanism is provided with a guide member for guiding the operating direction of the spring member and the damper and the spring member, the damper, and the guide member are disposed between the motor case and the motor mounting member.
According to a ninth aspect of the present invention, there is provided an in-wheel motor system, wherein the shock absorbing mechanism is provided with a guide member for guiding the operating direction of the spring member and the damper and the guide member is disposed in symmetrical positions with respect to the center of the spring member in the tire fore-aft direction on the upper face side of the motor case.
According to a tenth aspect of the present invention, there is provided an in-wheel motor system, wherein the drive force of the motor is transmitted to the wheel through the medium of a flexible coupling.

According to a eleventh aspect of the present invention, there is provided an in-wheel motor system incorporated into a drive wheel comprising an electric motor and a reduction gear mechanism connected to an output shaft of the electric motor for reducing the rotation speed of the motor and transmitting it to a wheel, wherein the motor and the reduction gear mechanism are connected to each other by a flexible coupling, and wherein a motor case supporting the stator side of the motor and an unsprung part of a vehicle are connected to each other by a shock absorbing mechanism equipped with a spring member and a damper, whereby the mass of the motor acts as the mass of a dynamic damper.
According to an twelfth aspect of the present invention, there is provided an in-wheel motor system, wherein a motor mounting member is disposed on a strut suspending the knuckle, which is an unsprung member of a vehicle, from a vehicle body and the motor case supporting the stator side of the motor is mounted to the motor mounting member through the medium of a shock absorbing mechanism, whereby the mass of the motor acts as the mass of a dynamic damper.

### EFFECT OF THE INVENTION

According to the present invention, the motive power of an electric motor is transmitted to a wheel through the medium of a reduction gear mechanism. And also the motor case supporting the stator side of the motor is floating-mounted with respect to the unsprung portion of a vehicle, with the motor case connected to a knuckle coupled to a wheel section or to a motor mounting member provided on a strut suspending a knuckle from a vehicle body by a shock absorbing member or a shock absorbing mechanism equipped with a spring member and a damper. As a result, the ground contact performance of the vehicle and the riding comfort can be both improved markedly. And if a casing of the reduction gear mechanism is integrally structured together with a knuckle coupled to the suspension mechanism of the vehicle, then it will be possible to replace the motor and the reduction gear mechanism separately. This makes it possible to use the same motor for wheels of different tire diameters or change the output torque by changing the reduction gear mechanism only.
Also, with the structure of the present invention employed, the motor only will be mounted on the unsprung portion of the vehicle, so that the durability of the power transmission mechanism, such as a flexible coupling, that couples the electric motor to the reduction gear mechanism can be improved.
Moreover, the reduction gear mechanism may be constituted by a first reduction gear mechanism connected directly to the output shaft of the motor and a second reduction gear mechanism connecting the first reduction gear mechanism to the wheel, and the rotation speed of the electric motor may be reduced in two stages and transmitted to the wheel. Then, even when a small motor of high rotation speed and low torque is used, a large drive force can be produced without the use of a reduction gear mechanism of a larger diameter.
Also, planetary gear mechanisms may be used as the first and second reduction gear mechanisms. Then, the motor shaft and the gear shaft are coaxial with each other, so that the diameter of the gear housing will never greatly exceed that of the motor housing, thus ensuring even higher space efficiency.

Also, the upper face side of the motor case and the knuckle coupled to a wheel section may be connected to each other by a shock absorbing mechanism equipped with a damper and a spring member and the spring member may be disposed on the upper face side of the motor case and at the center of the motor case in the tire fore-aft direction. Then the space efficiency may not only rise, but also the mass of the motor may act stably as the mass of a dynamic damper.
Moreover, the shock absorbing mechanism may be provided with a guide member for guiding the operating direction of the spring member and the damper, and the spring member, the damper and the guide member may be disposed not only between the motor case and the motor mounting member but also on the upper face side of the motor case and in symmetrical positions with respect to the center of the spring member in the tire fore-aft direction. Then the spring member and the damper can be guided reliably in the up-and-down direction, so that the mass of the motor may function sufficiently as the mass of a dynamic damper.
Note also that the motor is mounted on the knuckle through the medium of a shock absorbing mechanism. Therefore, if the drive force of the motor is transmitted to the wheel by connecting the motor to the wheel by a power transmission mechanism such as a universal joint or a flexible coupling, then the drive force of the motor can be transmitted to the wheel steadily.

Also, the electric motor, which is the source of drive, and the reduction gear mechanism, which transmits the rotation force of the motor to the wheel, may be connected to each other by a flexible coupling, and the motor case supporting the stator side of the motor may be connected to a knuckle coupled to a wheel section or to a motor mounting member provided on a strut suspending a knuckle from the vehicle body by means of a shock absorbing mechanism equipped with a spring member and a damper. This arrangement may separate the mass of the reduction gear mechanism from the mass of the motor, thereby allowing the mass of the motor alone to act as the mass of the dynamic damper. Then it will be possible not only to reduce the load working on the flexible coupling markedly but also to reduce the drive force (torque) to be inputted to the flexible coupling, which is the power transmission mechanism. Also, since the reduction gear mechanism driving the wheel is connected directly to the wheel hub, the drive efficiency can be improved markedly.

### BRIEF DESCRIPTION OF THE DRAWINGS

FIG. 1 is a vertical sectional view showing a structure of an in-wheel motor system according to Embodiment 1.
FIG. 2 is a perspective illustration showing a structure of an in-wheel motor system according to Embodiment 1.
FIG. 3 is an illustration showing an outline of a planetary gear mechanism.
FIG. 4 is an illustration showing an outline of a parallel shaft gear mechanism.
FIG. 5 is a vertical sectional view showing a structure of an in-wheel motor system according to Embodiment 2.
FIG. 6 is a perspective illustration showing a structure of an in-wheel motor system according to Embodiment 2.
FIG. 7 is an illustration showing another structure of an in-wheel motor system according to the present invention.
FIG. 8 is an illustration showing still another structure of an in-wheel motor system according to the present invention.
FIG. 9 is an illustration showing yet another structure of an in-wheel motor system according to the present invention.
FIG. 10 is an illustration showing a structure of a conventional in-wheel motor system.

### REFERENCE NUMERALS

- 1: tire
- 2: wheel
- 2a: rim
- 2b: wheel disk
- 3: wheel hub
- 3k: rotary shaft of wheel hub
- 4: strut
- 4a: coil spring
- 4b: shock absorber
- 4m, 5m: motor mounting member
- 5: knuckle
- 5j: bearing
- 6: damping mechanism
- 7: upper arm
- 8: lower arm
- 10: electric motor
- 10a: motor case
- 10b: output shaft
- 10j: bearing
- 10S: stator
- 10R: rotor
- 11: reduction gear mechanism
- 11a: first planetary gear mechanism
- 11b: second planetary gear mechanism
- 11c: case
- 11k: carrier
- 12: flexible coupling
- 20: shock absorbing mechanism
- 21: spring member
- 22: damper
- 22a: cylinder
- 22b: shaft
- 23A, 23B: guide member
- 23a: fixed part
- 23b: guide shaft

### BEST MODE FOR CARRYING OUT THE INVENTION

Preferred embodiments of the present invention will be described hereinbelow with reference to the accompanying drawings.

### Embodiment 1

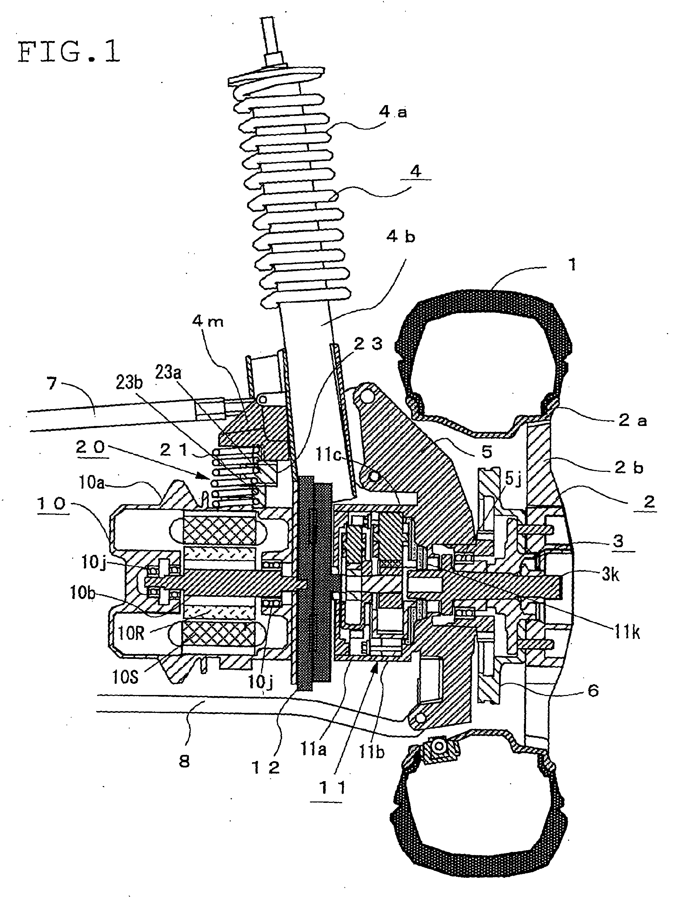

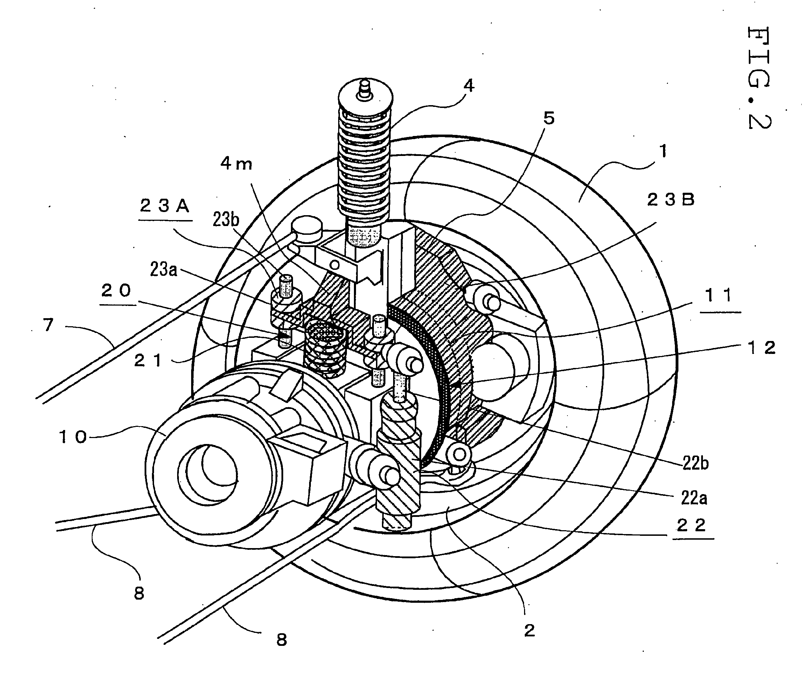

FIG. 1 is a vertical sectional view showing a structure of an in-wheel motor system according to Embodiment 1, and FIG. 2 is a perspective illustration thereof. In each of the figures, reference numeral 1 denotes a tire, 2 a wheel composed of a rim 2a and a wheel disk 2b, 3 a wheel hub connected to the wheel 2 at the rotary shaft thereof, 4 a strut having a coil spring 4a and a shock absorber 4b and suspending a knuckle 5 connected thereto via the wheel hub 3 and a bearing 5j from a vehicle body, 6 a brake mechanism mounted to the wheel hub 3, 7 an upper arm connected to the strut 4, and 8 a lower arm supporting the knuckle 5 from below.
Also, reference numeral 10 denotes an electric motor provided with a motor case 10a supporting the stator 10S side thereof, an output shaft 10 rotatably mounted on the motor case 10a by bearings 10j, and a rotor 10R mounted on the output shaft 10b, and 11 denotes a reduction gear mechanism provided with a first planetary gear mechanism 11a connected to the output shaft 10b of the motor 10 and a secondary planetary gear mechanism 11b connecting the first planetary gear mechanism 11a to the wheel hub 3 for reducing the rotation speed of the motor 10 and transmitting it to the wheel 2.

In this embodiment, the electric motor 10 and the reduction gear mechanism 11 are placed in separate casings, and the electric motor 10 and the reduction gear mechanism 11 are connected to each other by a flexible coupling 12, which is a power transmission mechanism such as an Oldham's coupling. A casing 11c of the reduction gear mechanism 11 is integrally structured together with the knuckle 5, and by providing a motor mounting member 4m on the lower part of the strut 4, the motor case 10a supporting the stator 10S side of the motor 10 is mounted to the motor mounting member 4m through the medium of a shock absorbing mechanism 20 to be described in detail below. Accordingly, removal of the flexible coupling 12 allows separation of the electric motor 10 and the reduction gear mechanism 11 from each other, so that it becomes possible to replace the motor 10 and the reduction gear mechanism 11, which is integrated with the knuckle 5, separately.

More specifically, the shock absorbing mechanism 20 includes a spring member 21 which is a coil spring, a damper 22 which has a cylinder 22a, a not-shown piston, and a shaft 22b coupled with the piston, and two guide members 23 (23A and 23B) consisting of a fixed part 23a and a guide shaft 23b for guiding the operation of the spring member 21 and the damper 22 in an up-and-down direction. And one end of the spring member 21 is mounted to the motor mounting member 4m, and the other end thereof to the central portion of the upper face side (strut 4 side) of the motor case 10a. Also, the cylinder 22a of the damper 22 is mounted to one side face of the motor case 10a, and one end of the shaft 22b to one end of the motor mounting member 4m.
Also, the two guide members 23,23 are disposed symmetrically in the tire fore-aft direction with the spring member 21 in the middle. That is, the fixed parts 23a,23a of the guide members 23,23 are attached respectively to the motor mounting member 4m, and the guide shafts 23b,23b thereof are installed upright on the motor case 10a.
In this manner, the present embodiment uses an arrangement such that one spring member 21 is mounted to a central portion of the upper face side of the motor case 10a and two guide members 23A and 23B are disposed on both sides thereof, so that the spring member 21 can be guided steadily in the up-and-down direction. Thus, the motor 10 functions sufficiently as a dynamic damper, which not only improves markedly the ground contact performance and riding comfort of a vehicle running on a rough road, but also simplifies the structure of a shock absorbing mechanism 20.

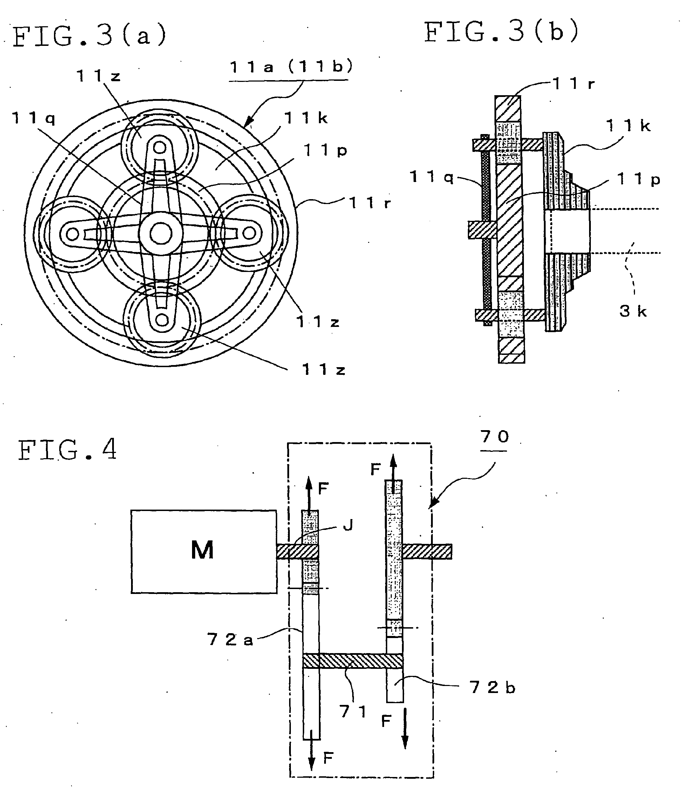

Also, more specifically, the planetary gear mechanism 11a (11b), as shown in FIGS. 3A and 3B, includes a sun gear 11p, planetary gears 11z which, connected to the sun gear 11p mounted to the input shaft by arms 11q, revolve around the shaft of the sun gear 11p through the space between the sun gear 11p and a ring gear 11r mounted to the inner surface of a not-shown gear housing, and a carrier 11k connected to the planetary gears 11z and mounted to the output shaft. The planetary gear mechanism 11a (11b) is a mechanism for reducing the rotation speed of the sun gear 11p to a rotation speed which corresponds to the period of revolution of the planetary gears 11z. And, in the present embodiment, the carrier 11k of the second planetary gear mechanism 11b is coupled to a rotary shaft 3k of a wheel hub 3 by a spline coupling or a serration coupling, and thus the rotation of the electric motor 10 is transmitted to the wheel 2.
It is to be noted that the reduction gear mechanism may also be a parallel shaft gear mechanism 70 as shown in FIG. 4. However, for the parallel shaft gear mechanism 70, there need to be an output shaft J of the motor, a counter shaft 71, which is a shaft other than the former, and gears 72a and 72b. As a result, a gear housing 11c may have a larger diameter, which presents the possibility of interference with peripheral members such as the knuckle 5. And this creates the problem of not only limited freedom of layout but also of the necessity to use a larger bearing at the shaft end because of a reaction force F arising from gear mesh.
In contrast with that, the present embodiment uses planetary gear mechanisms 11a and 11b as the reduction gear mechanism, so that the motor shaft and the gear shaft are coaxial with each other and thus the diameter of the gear housing will never greatly exceed that of the motor housing. Hence, the freedom of layout can not only be greater, but the space efficiency can also be enhanced.
Also, in the reduction gear mechanism 11, the first planetary gear mechanism 11a and the second planetary gear mechanism 11b are connected to each other in series. That is, the input shaft of the first planetary gear mechanism 11a is connected to the output shaft 10b of the electric motor 10, and the carrier 11k of the first planetary gear mechanism 11a is connected to the input shaft of the second planetary gear mechanism 11b. Thus, the output torque of the first planetary gear mechanism 11a can be made larger at the second planetary gear mechanism 11b before it is transmitted to the wheel 2. As a result, even when a motor of low torque is used, the wheel can be driven adequately, and furthermore the rotation speed is reduced in two stages, so that the rotation speed of the motor can be raised. Therefore, it is possible that an adequate drive force can be produced even when the electric motor 10 used is a small, light-weight motor of high rotation speed and low torque.

Generally speaking, where a rotary drive mechanism combining an electric motor 10 and a reduction gear mechanism 11 is used, it is possible to use a small motor of higher rotation speed and lower torque than those of a direct-drive motor driving a wheel 2 directly. However, with a conventional in-wheel motor as shown in FIG. 10, a planetary reducer 50b of large output torque is coupled to a wheel 56 by a constant-velocity oint 55, which is a power transmission mechanism, and therefore the load torque of the power transmission mechanism is large. In contrast with that, a flexible coupling 12, which is the power transmission mechanism of the present embodiment, connects a small electric motor 10 of low torque to a reduction gear mechanism 11. Therefore the load torque is small, and hence the durability of the power transmission mechanism can be improved. Moreover, since the output of the reduction gear mechanism 11 is transmitted directly to the wheel 2, the drive efficiency is improved over that of the conventional system.
Also, as in the present embodiment, the use of a reduction gear mechanism 11, which is a twin arrangement of a first gear mechanism 11a and a second gear mechanism 11b connected in series, can make the electric motor 10 even more small-size and light-weight. Therefore the load torque acting on the flexible coupling can be made smaller, and the durability thereof further improved. And in addition, when elastically supporting the electric motor 10 separated from the mass of the reduction gear mechanism 11, it is sufficient to support the motor case 10a from above only, as stated above. This not only makes the shock absorbing mechanism 20 smaller and lighter-weight, but also improves the space efficiency.

As described hereinabove, according to Embodiment 1, the electric motor 10 and the reduction gear mechanism 11 are placed in separate casings, and the electric motor 10 and the reduction gear mechanism 11 are connected to each other by a flexible coupling 12 such as an Oldham's coupling, which is a power transmission mechanism. A motor mounting member 4m is provided on the lower part of the strut 4 and the motor case 10a supporting the stator 10S side of the motor 10 is mounted on the motor mounting member 4m through the medium of shock absorbing mechanism 20. Also, a casing 11c of the reduction gear mechanism 11 is integrally structured together with the knuckle 5, so that the load torque can be made smaller, and the durability thereof can be improved. And it becomes possible to replace the motor 10 and the reduction gear mechanism 11, which is integrated with the knuckle 5, separately.
Also, a motor mounting member 4m is provided on the lower part of a strut 4 suspending the knuckle 5, and the motor 10 is mounted on the motor mounting member 4m through the medium of a shock absorbing mechanism 20 equipped with two guide members 23A and 23B for guiding the operating direction of a spring member 21 and a damper 22, thereby having only the mass of the motor 10 act as the mass of the dynamic damper. Thus, the ground contact performance and riding comfort of a vehicle running on a rough road are both improved markedly.

Also, a reduction gear mechanism 11, which transmits the rotation of the electric motor 10 to the wheel 2, is constituted by a first planetary gear mechanism 11a connected to the output shaft 10b of the electric motor 10 and a second planetary gear mechanism 11b connecting the first planetary gear mechanism 11a to the wheel hub 3. And the reduction gear mechanism 11 and the electric motor 10, which are integrally structured together, are mounted to the knuckle 5. As a result, a large output torque can be obtained even when a small motor of high rotation speed and low torque is used. Accordingly, even when the tire is of a small diameter, an adequate drive force can be secured without the use of a reduction gear mechanism of a larger diameter.

### Embodiment 2

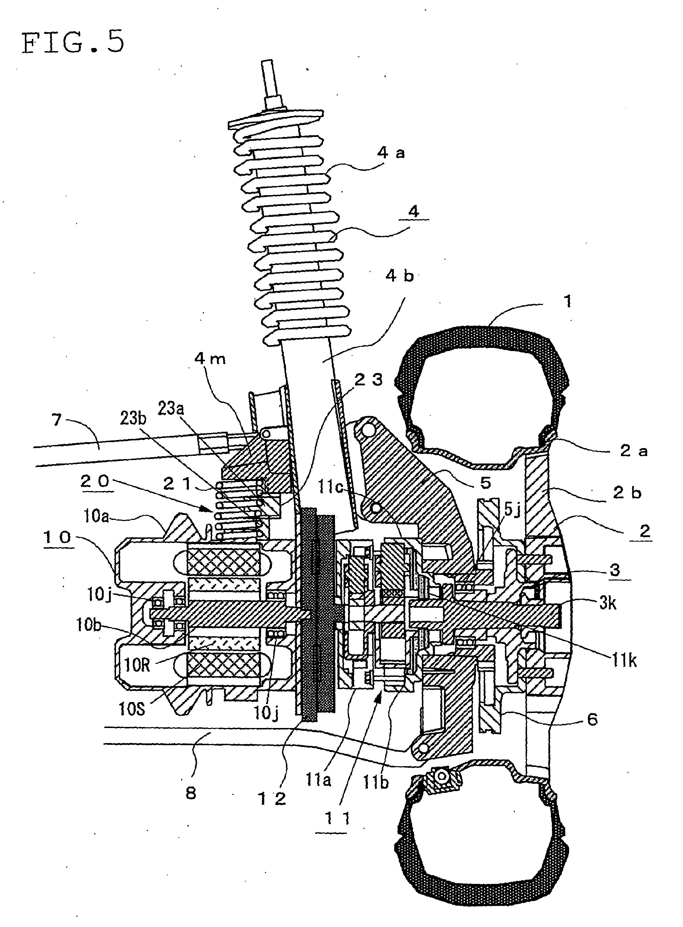

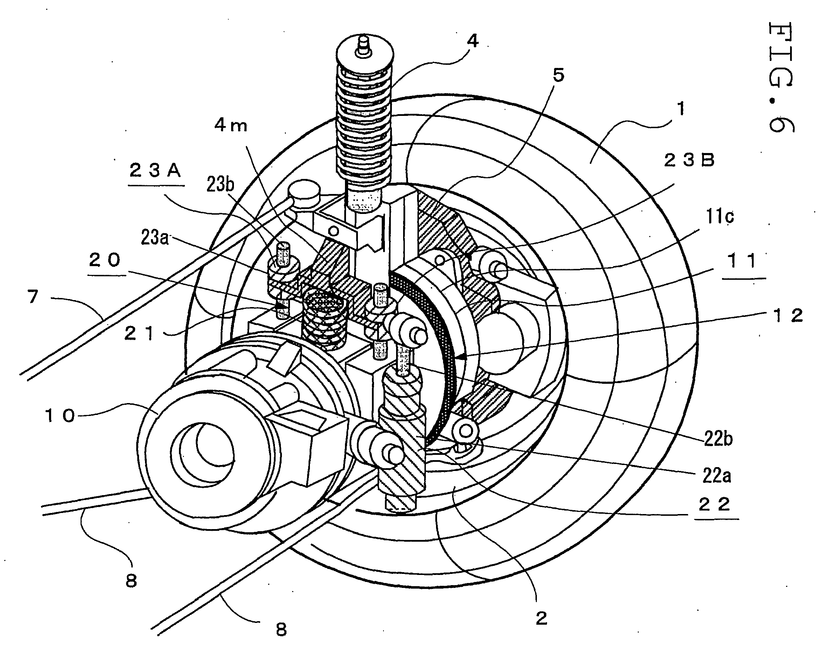

In Embodiment 1, an electric motor 10 and a reduction gear mechanism 11 are placed in separate casings. And, by providing a motor mounting member 4m on the lower part of a strut 4, a motor case 10a supporting the stator 10S side of the motor 10 is mounted on the motor mounting member 4m through the medium of a shock absorbing mechanism 20. Also, a casing 11c of the reduction gear mechanism 11 is integrally structured together with a knuckle 5. In Embodiment 2, however, as shown in FIG. 5 and FIG. 6, an electric motor 10 and a reduction gear mechanism 11 may be coupled with each other by a flexible coupling 12, and a motor case 10a supporting the stator 10S side of the motor 10 may be mounted to the motor mounting member 4m through the medium of a shock absorbing mechanism 20. And also a casing 11c of the reduction gear mechanism 11 may be fixed to a knuckle 5.
In this embodiment, too, the reduction gear mechanism 11 is separated from the electric motor 10 by the flexible coupling 12. Therefore, a carrier 11k connected to a not-shown ring gear of a second gear mechanism 11b of the reduction gear mechanism 11 may be coupled to a rotary shaft 3k of a wheel hub 3 by a spline coupling or a serration coupling, and thus the rotation force of the electric motor 10 can be transmitted to a wheel 2 while making allowance for the axial movement of the rotary shaft 3k.
Also, in a similar manner to Embodiment 1, a single spring member 21 of the shock absorbing mechanism 20 may be mounted to a central portion of the upper face side of the motor case 10a, and two guide members 23A and 23B are disposed on both sides thereof, so that spring member 21 can be guided steadily in the up-and-down direction. Thus, the motor 10 is allowed to function sufficiently as a dynamic damper, and also the structure of the shock absorbing mechanism 20 can be simplified.

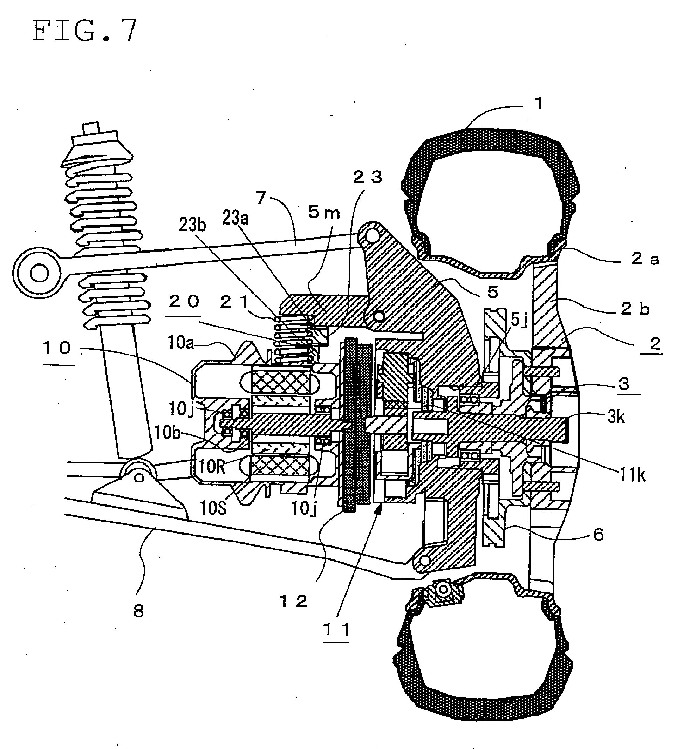

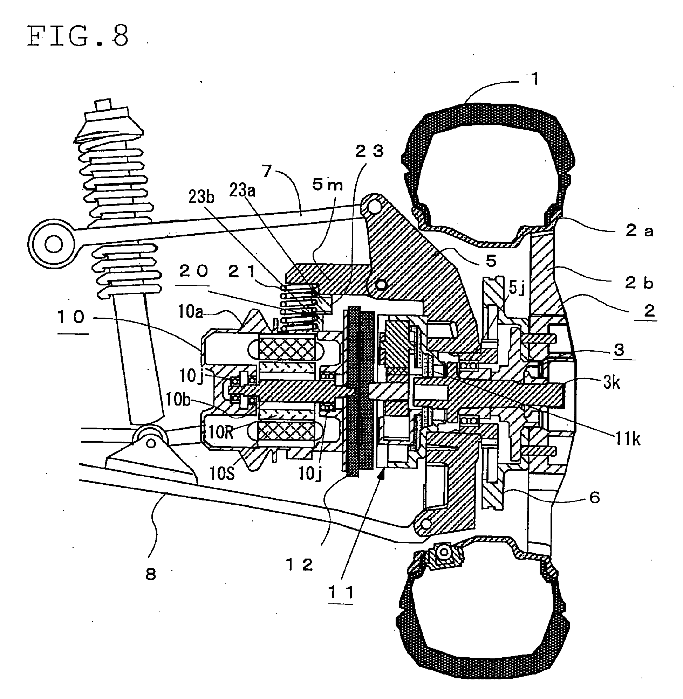

In the heretofore described Embodiments 1 and 2, the suspension used to suspend wheels from the vehicle body is of a strut type. However, the present invention is not limited to such a structure, but is also applicable to vehicles with suspensions of other structures such as double wishbone suspensions. For example, in the case of a double wishbone suspension, as shown in FIG. 7 and FIG. 8, a motor mounting member 5m may be provided in the vicinity of the connecting point of a knuckle 5 and an upper arm 7, and the motor mounting member 5m and a motor case 10a may be connected with each other by a shock absorbing member 20, or otherwise the arrangement may be such that the upper side of the knuckle 5 is so formed as to protrude in the direction of the electric motor 10 and the shock absorbing member 20 is mounted to this protruding portion. Note that in this case, too, it is important for the two guide members 23A and 23B to be disposed symmetrically with respect to the center of the motor case 10c in the tire fore-aft direction. As a result, the electric motor 10 can be stably floating-mounted with respect to the knuckle 5.
Also, in the foregoing embodiments, there is only one spring member 21, which is disposed in the middle of two guide members 23A and 23B. However, it is not necessary that there is only one spring member 21, and there may be a plurality of spring members 21. When there are a plurality of spring members 21, it is preferable that they are disposed in symmetrical positions with respect to the center of the motor case 10a in the tire fore-aft direction. Also, when there are a plurality of spring members 21, the space efficiency can be improved by disposing two of the spring members 21 between the fixed parts 23a,23a and the motor case 10a around the periphery of the guide shafts 23b,23b of the guide members 23A and 23B.
It is to be appreciated that in the present invention a light-weight electric motor 10 only is suspended from a strut 4 or a knuckle 5, so that a single unit of spring member 21 or damper 22 suffices for the purpose thereof. Moreover, their being only one provides the advantage of fewer constituent parts and easier assembly.

Also, it is not necessary that the reduction gear mechanism 11 is in a twin arrangement. For example, for tires, such as small tires, that do not require much output torque, a single reduction gear mechanism as shown in FIG. 7 and FIG. 8 may suffice. This is due to the fact that the mass of the electric motor 10 and the mass of the reduction gear mechanism 11 are separated from each other by the flexible coupling 12. And therefore, with the motor case 10a supported by a shock absorbing mechanism 20 from above only, the electric motor 10 can function sufficiently as a dynamic damper.
Also, in the foregoing embodiments, the electric motor 10 and the reduction gear mechanism 11 are connected to each other by a flexible coupling 12. However, the power transmission mechanism connecting the electric motor 10 and the reduction gear mechanism 11 is not limited to the flexible coupling 12, and other types of power transmission mechanisms, such as constant-velocity joints, may also be used as long as they can allow eccentricity and deflection angle that may exist between the output shaft of the motor and the input shaft of the reduction gear mechanism.

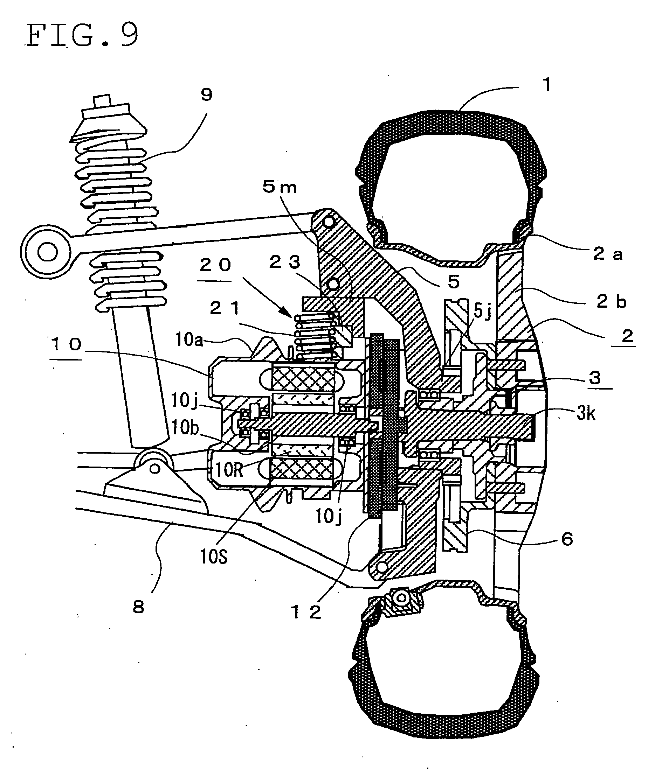

Also, in the foregoing Embodiments 1 and 2, examples cited are such that the upper side of the motor case 10a of a geared motor consisting of an electric motor 10 and a reduction gear mechanism 11 is connected to a knuckle 5 or a motor mounting member 4m provided on the lower part of a strut 4 suspending a knuckle 5 from the vehicle body by a shock absorbing mechanism 20. However, as shown in FIG. 9, the present invention is also applicable to modes of application where the wheel 2 is driven by the electric motor 10 only. In such a case, a motor mounting member 5m may be provided on the upper arm 7 side of a knuckle 5, and the motor mounting member 5m and the motor case 10a are connected to each other by the shock absorbing member 20, and the output shaft 10b of the motor and the rotary shaft 3k of the wheel hub may be connected to each other by a power transmission mechanism, such as a flexible coupling 12. It is to be noted that FIG. 9 shows a case where the vehicle suspension is a double wishbone type, but it goes without saying that the present invention is applicable to the strut-type suspension as well.

### INDUSTRIAL APPLICABILITY

As discussed herein, according to the present invention, the motor can be reliably floating-mounted with respect to the unsprung portion of a vehicle, and the shock absorbing mechanism can be made smaller in size and lighter in weight. As a result, an in-wheel motor system which excels not only in the ground contact performance and riding comfort of the vehicle running on a rough road, but also in the space efficiency.

## Claims

1. An in-wheel motor system comprising:
an electric motor; and
a reduction gear mechanism for reducing the rotation speed of an output shaft of the motor and transmitting the motive power of the motor to the wheel;
wherein the motive power of the motor is transmitted to the wheel through the reduction gear mechanism, and wherein a motor case supporting the stator side of the motor is mounted on an unsprung part of a vehicle through the medium of a shock absorbing member or a shock absorbing mechanism and a casing of the reduction gear mechanism is integrally structured together with a knuckle which is coupled to a suspension mechanism of the vehicle.

2. The in-wheel motor system according to claim 1, wherein the casing of the reduction gear mechanism and the motor case are structured as separate units.

3. The in-wheel motor system according to claim 1 or claim 2, wherein the motor and the reduction gear mechanism are connected to each other by a flexible coupling.

4. The in-wheel motor system according to any of claims 1 to 3, wherein a motor mounting member is disposed on a strut suspending the knuckle from a vehicle body and the shock absorbing member or shock absorbing mechanism is disposed between the motor mounting member and the upper face side of the motor case.

5. The in-wheel motor system according to any of claims 1 to 4, wherein the reduction gear mechanism is constituted by a first reduction gear mechanism directly connected to an output shaft of the motor and a second reduction gear mechanism connecting the first reduction gear mechanism to the wheel.

6. The in-wheel motor system according to any of claims 1 to 5, wherein a planetary gear mechanism is used as the reduction gear mechanism.

7. The in-wheel motor system according to any of claims 1 to 6, wherein the upper face side of the motor case is connected to a knuckle coupled to a wheel section by a shock absorbing mechanism equipped with a spring member and a damper and the spring member is disposed at the center of the motor case in the tire fore-aft direction on the upper face side thereof.

8. The in-wheel motor system according to claim 7, wherein the shock absorbing mechanism is provided with a guide member for guiding the operating direction of the spring member and the damper and the spring member, the damper, and the guide member are disposed between the motor case and the motor mounting member.

9. The in-wheel motor system according to claim 7 or claim 8, wherein the shock absorbing mechanism is provided with a guide member for guiding the operating direction of the spring member and the damper and the guide member is disposed in symmetrical positions with respect to the center of the spring member in the tire fore-aft direction on the upper face side of the motor case.

10. The in-wheel motor system according to any of claims 7 to 9, wherein the drive force of the motor is transmitted to the wheel through the medium of a flexible coupling.

11. An in-wheel motor system incorporated into a drive wheel comprising:
an electric motor; and
a reduction gear mechanism connected to an output shaft of the electric motor for reducing the rotation speed of the motor and transmitting the motive power of the motor to a wheel;
wherein the motor and the reduction gear mechanism are connected to each other by a flexible coupling, and wherein a motor case supporting the stator side of the motor and an unsprung part of a vehicle are connected to each other by a shock absorbing mechanism equipped with a spring member and a damper, whereby the mass of the motor acts as the mass of a dynamic damper.

12. The in-wheel motor system according to claim 11, wherein a motor mounting member is disposed on a strut suspending the knuckle, which is an unsprung member of a vehicle, from a vehicle body and the motor case supporting the stator side of the motor is mounted to the motor mounting member through the medium of a shock absorbing mechanism, whereby the mass of the motor acts as the mass of a dynamic damper.
